# EUROPEAN PATENT APPLICATION

(11) **EP 2 073 517 A1**
(43) Date of publication of application: **24.06.2009**
(21) Application number: 07124031.1
(22) Date of filing: 21.12.2007
(51) Int. Cl.: H04M 1/725, H04M 1/57, H04M 1/56

(54) **Display of call context information such as appointments with or communication history related to the other party**

(71) Applicant: Research In Motion Limited, Waterloo, Ontario N2L 3W8 (CA)
(72) Inventor: Adams, Neil, Waterloo Ontario N2K 4E4 (CA); Vander Veen, Raymond, Waterloo Ontario N2V 2M6 (CA)
(74) Representative: Rickard, David John

(57) **Abstract**

The storage included with smart phones allows for the maintenance of: an extensive contact list accessed by an address book application; an appointment list accessed by a calendar application; and an e-mail message library accessed by a messaging application. However, for the most part, smart phone designers have not used the wealth of information available on a smart phone to enhance a telephone call. It has been recognized that, while participating in a telephone call, it would be advantageous to have some information relating to the other party readily available. As such, for a given telephone call, information relating to the other party may be automatically located and references to information are displayed, thereby providing a context for the call. The information may include: Past Appointments, i.e., recent meetings associated with the contact; Future Appointments, i.e., upcoming meetings associated with the contact; and Messages, i.e., e-mail messages, SMS messages and Instant Messaging messages both to and from the contact.

## Description

The present application relates generally to using a device having storage to participate in a telephone call and, more specifically, to locating and presenting a reference to information in the storage to place the telephone call in context.

During recent years, the popularity of so-called "smart phones" has increased significantly. Such smart phones are typically mobile, cellular, telephones that include memory and processing power beyond that of a typical mobile telephone. Accordingly, such smart phones have the built-in capability to retrieve e-mail messages and display the retrieved messages. In addition, such smart phones allow for composition of outgoing e-mail messages. The storage included with such phones also allows for the maintenance of: an extensive contact list accessed by an address book application; an appointment list accessed by a calendar application; and an e-mail message library accessed by a messaging application.

However, for the most part, smart phone designers have not used the wealth of information available on a smart phone to enhance a telephone call. For instance, while participating in a call the other party to the call may ask whether another person may be added to an upcoming meeting. Unfortunately, to view and change the appointment for the upcoming meeting, the user may be required to exit the user interface screen of the phone application executed by the smart phone to open the calendar application and search for the appointment. Similarly, to answer a question posed in the call about the outcome of a recent thread of e-mail messages or to extract information contained in the recent thread of e-mail messages, the user may be required to exit the user interface screen of the phone application and search for the messages.

### GENERAL

It has been recognized that, while participating in a telephone call, it would be advantageous to have some information relating to the other party readily available. As such, for a given telephone call, information relating to the other party may be automatically located and references to information are displayed, thereby providing a context for the call.

In accordance with an aspect of the present application, there may be provided a method of providing enhanced phone call context information in a communication device. The method may comprise receiving an indication of a given data item in a contact database, locating a contact-related data item, related to the given data item, in another database and presenting a reference to the contact-related data item on a display of the communication device. Additionally, a communication device may be provided for carrying out this method and a computer readable medium is provided for containing instructions to allow a processor to carry out this method.

Other aspects and features of the present application will become apparent to those of ordinary skill in the art upon review of the following description of specific embodiments of the application in conjunction with the accompanying figures.

### BRIEF DESCRIPTION OF THE DRAWINGS

Reference will now be made to drawings that show, by way of example, embodiments of the invention and in which:

FIG. 1 illustrates components of a wireless mobile data communication device, according to an embodiment of the present application;

FIG. 2 illustrates an exemplary layout of a typical user interface screen for a phone application on the mobile device of FIG. 1;

FIG. 3 an exemplary layout of a new user interface screen for a phone application on the mobile device of FIG. 1, according to an embodiment of the present application;

FIG. 4 illustrates steps in an exemplary method of providing enhanced phone call context information for an incoming call, according to an aspect of the present application;

FIG. 5 illustrates steps in an exemplary method of providing enhanced phone call context information for a dialed call, according to an aspect of the present application;

FIG. 6 illustrates steps in an exemplary method of providing enhanced phone call context information for a contact-selected call, according to an aspect of the present application; and

FIG. 7 illustrates steps in an exemplary method of providing enhanced phone call context information for an ongoing call, according to an aspect of the present application.

### DESCRIPTION OF PREFERRED EMBODIMENTS

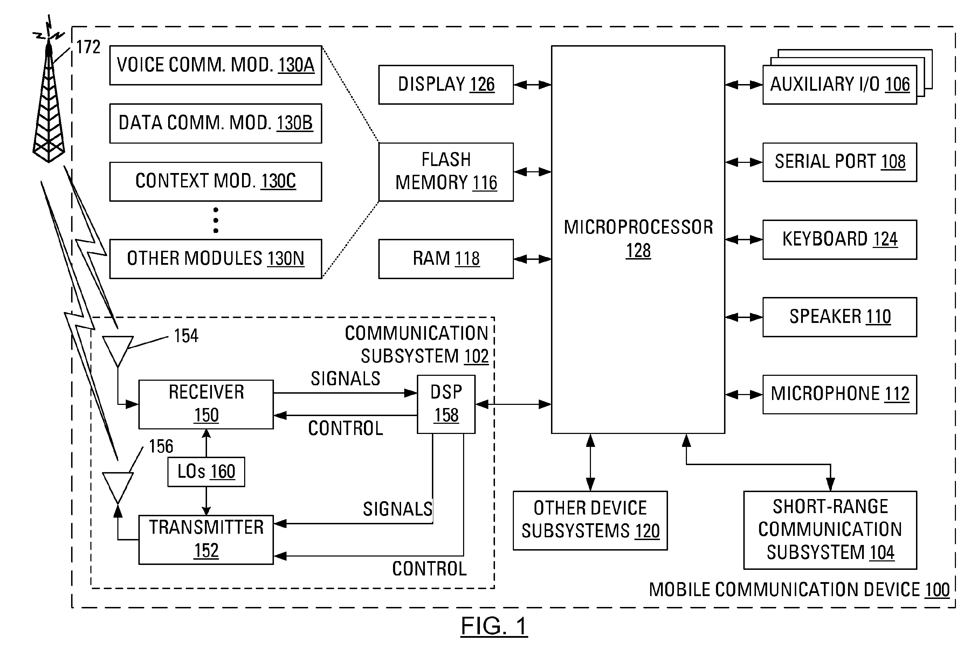

FIG. 1 illustrates a wireless mobile communication device 100 including a housing, an input device (a keyboard 124), and an output device (a display 126), which is preferably a full graphic or full color Liquid Crystal Display (LCD). Other types of output devices may alternatively be utilized. A processing device (a microprocessor 128) is shown schematically in FIG. 1 as coupled between the keyboard 124 and the display 126. The microprocessor 128 controls the operation of the display 126, as well as the overall operation of the mobile device 100, in response to actuation of keys on the keyboard 124 by a user.

The housing may be elongated vertically, or may take on other sizes and shapes (including clamshell housing structures). The keyboard may include a mode selection key, or other hardware or software, for switching between text entry and telephony entry.

In addition to the microprocessor 128, other parts of the mobile device 100 are shown schematically in FIG. 1. These include: a communications subsystem 102; a short-range communications subsystem 104; the keyboard 124 and the display 126, along with other input/output devices including a set of auxiliary input/output devices 106, a serial port 108, a speaker 111 and a microphone 112; as well as memory devices including a flash memory 116 and a Random Access Memory (RAM) 118; and various other device subsystems 120. The mobile device 100 may have a battery 122 to power the active elements of the mobile device 100. The mobile device 100 is preferably a two-way radio frequency (RF) communication device having voice and data communication capabilities. In addition, the mobile device 100 preferably has the capability to communicate with other computer systems via the Internet.

Operating system software executed by the microprocessor 128 is preferably stored in a computer readable medium, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 128, in addition to its operating system functions, enables execution of software applications on the mobile device 100. A predetermined set of software applications that control basic device operations, such as a voice communications module 130A and a data communications module 130B, may be installed on the mobile device 100 during manufacture. A context module 130C may also be installed on the mobile device 100 during manufacture, to implement aspects of the application. As well, additional software modules, illustrated as an other software module 130N, which may be, for instance, a personal information manager (PIM) application, may be installed during manufacture. The PIM application is preferably capable of organizing and managing data items in databases, such as e-mail messages in an e-mail message database, calendar events and appointments in a calendar database, voice mail messages in a voice mail message database and task items in a task database. The PIM application is also preferably capable of sending and receiving data items via a wireless carrier network represented in FIG. 1 by the base station antenna 172. Preferably, the data items managed by the PIM application are seamlessly integrated, synchronized and updated via the wireless carrier network with the device user's corresponding data items stored or associated with a host computer system.

Communication functions, including data and voice communications, may be performed through the communication subsystem 102 and, possibly, through the short-range communications subsystem 104. The communication subsystem 102 includes a receiver 150, a transmitter 152 and one or more antennas, illustrated as a receive antenna 154 and a transmit antenna 156. In addition, the communication subsystem 102 also includes a processing module, such as a digital signal processor (DSP) 158, and local oscillators (LOs) 160. The specific design and implementation of the communication subsystem 102 is dependent upon the communication network in which the mobile device 100 is intended to operate. For example, the communication subsystem 102 of the mobile device 100 may be designed to operate with the Mobitex™, DataTAC™ or General Packet Radio Service (GPRS) mobile data communication networks and may also be designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Other types of data and voice networks, both separate and integrated, may also be utilized with the mobile device 100.

When required network registration or activation procedures have been completed, the mobile device 100 may send and receive communication signals over the wireless carrier network. Signals received from the base station antenna 172 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the base station antenna 172 are processed (e.g., modulated and encoded) by the DSP 158 and are then provided to the transmitter 152 for digital to analog conversion, frequency up conversion, filtering, amplification and transmission to the base station antenna 172 via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as an Short Message Service (SMS) message or web page download, is processed by the communication subsystem 102 and is input to the microprocessor 128. The received signal is then further processed by the microprocessor 128 in preparation for output to the display 126, or alternatively to some other auxiliary I/O devices 106. A device user may also compose data items, such as e-mail messages or SMS messages, using the keyboard 124 and/or some other auxiliary I/O device 106, such as a touchpad, a rocker switch, a thumb-wheel, or some other type of input device. The composed data items may then be transmitted to the base station antenna 172 via the communication subsystem 102.

In a voice communication mode, overall operation of the device is substantially similar to the data communication mode, except that received signals may be output to the speaker 111, and signals for transmission may be generated by the microphone 112. Alternative voice or audio I/O subsystems, such as a voice message recording subsystem, may also be implemented on the mobile device 100. In addition, the display 126 may also be utilized in voice communication mode, for example, to display the identity of a calling party, the duration of a voice call, or other voice call related information.

The short-range communications subsystem 104 enables communication between the mobile device 100 and other proximate systems or devices, which need not necessarily be similar devices. For example, the short-range communications subsystem 104 may include an infrared device and associated circuits and components, or a Bluetooth™ communication module, to provide for communication with similarly-enabled systems and devices.

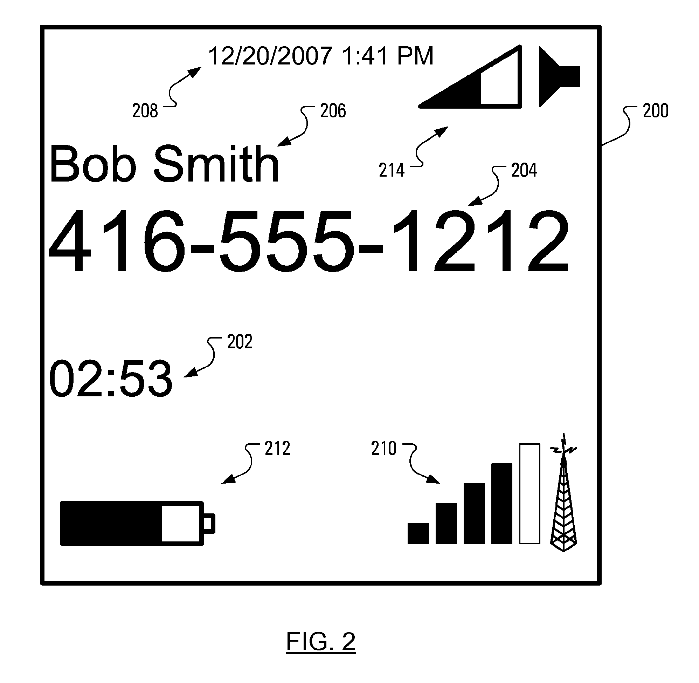

FIG. 2 illustrates an exemplary layout of a typical user interface screen 200 for a phone application on the mobile device 100. Typical call-in-progress information that is presented in the typical user interface screen 200 includes: call duration 202; telephone number of contact 204; name of contact 206; current time and date 208; signal strength 210; battery charge 212; and speaker volume 214.

In overview, the microprocessor 128 executes the context module 130C to perform a lookup in one or more databases to locate data items related to a contact in a telephone call. The microprocessor 128 then arranges the presentation of references to some of the data items found in the databases on the display 126 of the mobile terminal 100. The data items references which are presented on the display 126 may include: Past Appointments, i.e., recent meetings associated with the contact; Future Appointments, i.e., upcoming meetings associated with the contact; and Messages, i.e., e-mail messages, SMS messages and instant messages both to and from the contact.

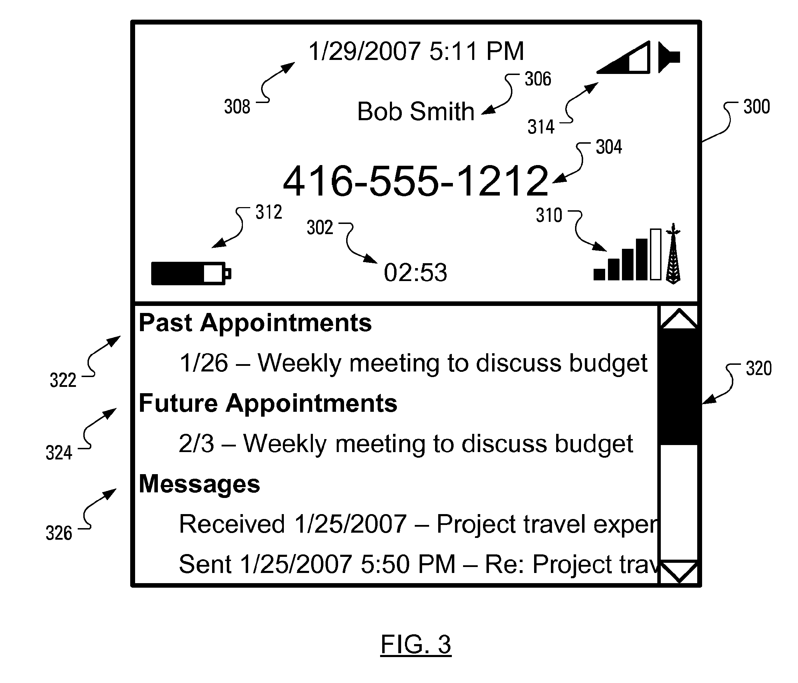

The data items may be presented in a list format and may share the space available on the display 126 with call-in-progress information. While the call-in-progress information is often spread around the entire display 126 (see typical user interface screen 200, FIG. 2), it is proposed herein to compress the presentation of call-in-progress information to take up approximately half of the space available on the display 126, with the other half taken up by references to contact-related data items (see an exemplary user interface screen 300, FIG. 3).

References to the contact-related data items may, for example, be presented, as illustrated in FIG. 3, in a list of references under headings such as: Past Appointments 322; Future Appointments 324; and Messages 326. As it is likely that the number of references to contact-related data items may exceed the number of references that can fit on half of the display 126, the references to contact-related data items may be presented in a window-like user interface structure that allows for scrolling. An indication of the availability of scrolling as well as an indication of the relative size of the list of items is provided, as is known, using a scroll bar 320.

In the list of references to contact-related data items under the Past Appointments heading 322, the list items may be references to meetings that have taken place and are associated with the contact. Rather than references to all the past meetings associated with the contact in the calendar database, the microprocessor 128 may limit the reference list to just those meetings that have taken place within a predefined time window. The time window may be, for example, the preceding seven days. As will be understood by a person of ordinary skill, the bounds of the predefined time window may be configurable.

In the list of references to contact-related data items under the Future Appointments heading 324, the list items may be references to planned meetings that are associated with the contact. Rather than references to all the future meetings associated with the contact in the calendar database, the microprocessor 128 may limit the reference list to just those meetings that are planned to take place within a predefined time window. The time window may be, for example, the approaching seven days. As will be understood by a person of ordinary skill, the bounds of the predefined time window may be configurable.

In the list of references to contact-related data items under the Messages heading 326, the list items may be references to messages that have been sent to the contact or received from the contact. Rather than references to all the e-mail messages associated with the contact in the e-mail message database, the microprocessor 128 may limit the reference list to just those messages that have been sent or received within a predefined time window. The time window may be, for example, the preceding seven days. As will be understood by a person of ordinary skill, the bounds of the predefined time window may be configurable.

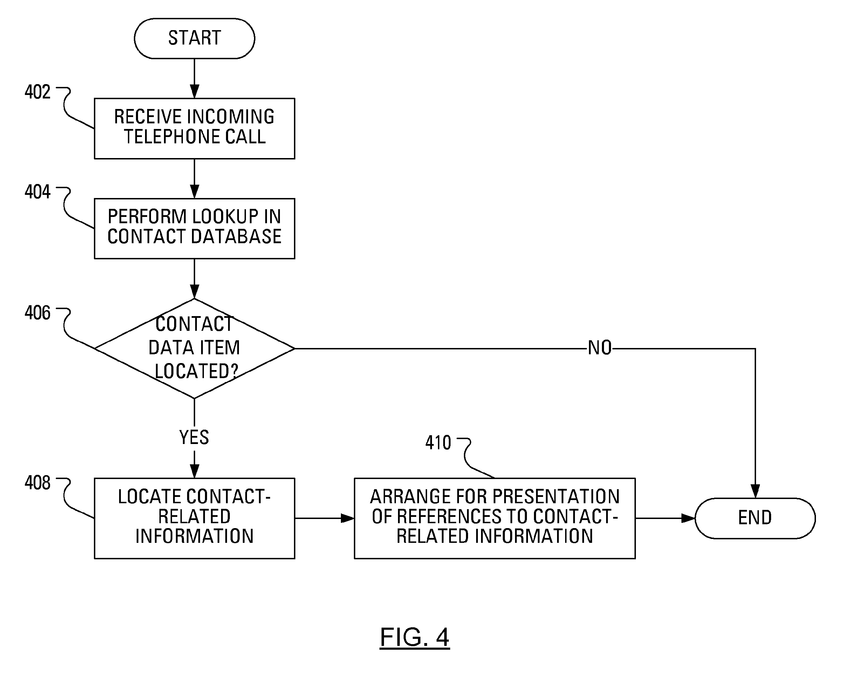

There exist multiple options for the timing of the execution of the context module 130C by the microprocessor 128. In a first timing option, the microprocessor 128 may automatically execute the context module 130C in response to the receipt of an incoming telephone call. Steps in an exemplary method of providing enhanced phone call context data items are provided in FIG. 4.

Initially, the microprocessor 128 receives (step 402) an incoming telephone call. Responsive to such receiving, the microprocessor 128 executes the context module 130C to perform (step 404) a lookup in the contact database. Often an incoming telephone call is associated with Calling Line Identification (CLID) information. Such CLID information typically includes a telephone number and a name associated with the telephone number. The context module 130C can use either the telephone number or the name as a search term when performing (step 404) the lookup in the contact database. The context module 130C next determines (step 406) whether a contact data item has been located for a contact associated with the incoming call.

In the case wherein the context module 130C has located a contact data item for the contact associated with the incoming call, the context module 130C further locates (step 408) contact-related data items, for instance, by exploiting logical connections between the data item for the contact and the data items for appointments, both past and future, and stored electronic messages. As will be clear to a person of ordinary skill in the art, electronic messages include, but are not limited to, e-mail messages, Instant Messaging messages, SMS Messages, Multimedia Messaging Service (MMS) messages and proprietary mobile-to-mobile messages.

Notably, in step 408, the context module 130C may not be limited to locating contact-related data items in the memory (e.g., the flash memory 116, the RAM 118) of the mobile device 100. Indeed, the context module 130C may locate contact-related data items in one or more externally-located databases. In particular, one example externally-located database may be found associated with a mobile device server from which the mobile device 100 receives data services. Another example externally-located database may be found in a world wide web-based information server.

With regard to determining logical connections between the contact data item and electronic message data items, the context module 130C may use the name of the contact as a search term when searching electronic message fields such as the TO field, the CC field, the BCC field and the body of the electronic message. More particularly, the searching may be prioritized such that the TO field is searched first, followed by the CC field, the BCC field and the message body.

With regard to determining logical connections between the contact data item and appointment (calendar) data items, the context module 130C may use the name of the contact as a search term when searching appointment fields such as a field identifying the organizer of a meeting, a field identifying invitees to a meeting and a field for indicating notes about the meeting.

Further logical connections between a contact data item and other data items may exist as well. For example, a given meeting may set up based on an exchange of one or more e-mail messages. Where an appointment data item is associated with the given meeting and has a logical connection to the contact data item, it may be considered that the e-mail messages have a logical connection to the contact data item.

Even more logical connections between a given contact data item and other data items may be found in other contact data items. For instance, a portion of the screen area that is set aside for information related to an ongoing call (see FIG. 3) may be devoted to the display of references to contact data items related to the given contact data item. For example, references to contact data items related to the given contact data item may be references to contact data items for people in the same organization, company, branch of government, etc. Alternatively or additionally, references to contact data items related to the given contact data item may be references to contact data items for people in the family of the contact associated with the given contact data item.

The context module 130C arranges (step 410) for the presentation of references to the contact-related data items on the display 126 while the mobile device 100 is causing the speaker 110 to emit an alert to bring the incoming call to the attention of the user.

For the mobile device 100 to be able to obtain the contact-related data items from an externally-located database while engaged in a call, it is necessary that the mobile device 100 be a "dual mode" device, i.e., a device capable of simultaneous voice communication and data communications via two separate communication subsystems. For example, one communication subsystem may be devoted to handling voice calls using a cellular telephony standard (e.g., GSM) while a second communication subsystem is devoted to handling a data communication session using, for instance, a wireless local area networking standard (e.g., IEEE 802.11, which is also known as "WiFi").

In the case wherein the context module 130C determines (step 406) that a data item for the contact associated with the incoming call has not been located, the method is complete and the enhanced phone call context information may not be provided.

Advantageously, in the first timing option, by arranging (step 410) the presentation of the references to contact-related data items before the user answers the call, the user is allowed to make a decision as to whether to answer the call. Arguably, the decision to answer the call, made after reviewing references to the contact-related data items, may be considered to be a better informed decision than such a decision made in the presence of only typical CLID information.

Notably, not all contact-related data items may be found immediately. Consequently, further references to contact-related data items may continue to appear after the user has answered the call.

Alternatively, in another timing option, database lookup (step 404) and the presentation (step 410) of the references to contact-related data items may be requested by the user after the user has answered an incoming call.

An application executing on the mobile device 100 implementing aspects of the feature described herein may include some user configuration options. For instance, one user configuration option may be a choice between automatic lookup of contact-related data items responsive to an incoming call and lookup of contact-related data items responsive to a user request.

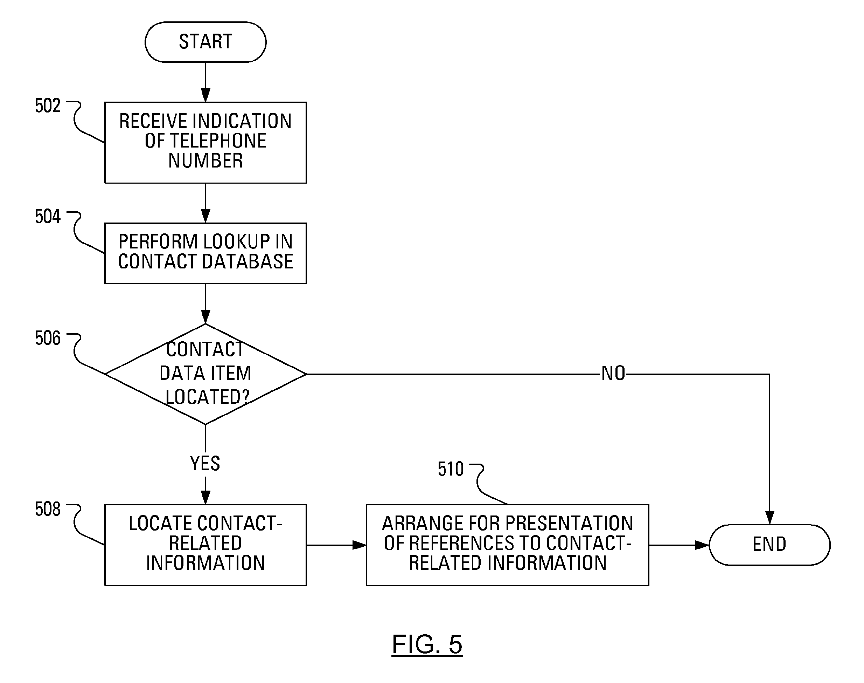

In a second timing option, the microprocessor 128 may automatically execute the context module 130C in response to the user initializing an outgoing call to a contact. Steps in a second exemplary method of providing enhanced phone call context information are provided in FIG. 5.

In one scenario, the user employs number keys on the keyboard 124 of the mobile device 100 to compose a telephone number for an outgoing call. Unbeknownst to the user, there may exist a data item associated with the telephone number in the contact database. The context module 130C receives (step 502) the composed telephone number and uses the composed telephone number as a search term when performing (step 504) a lookup in the contact database. The context module 130C next determines (step 506) whether a data item has been located for a contact associated with the outgoing call.

In the case wherein the context module 130C determines (step 506) that a data item for the contact associated with the outgoing call has been located, the context module 130C further locates (step 508) contact-related data items, for instance, by exploiting logical connections between the data item associated with the composed telephone number and the data item for appointments, both past and future, and stored e-mail messages. The context module 130C then arranges (step 510) for the presentation of the references to contact-related data items on the display 126.

In the case wherein the context module 130C determines (step 506) that a data item for the contact associated with the outgoing call has not been located, the method is complete and the enhanced phone call context information may not be provided.

For the second exemplary method of providing enhanced phone call context information (FIG. 5) rather than employing number keys on the keyboard 124 of the mobile device 100 to compose a telephone number for an outgoing call, the user may employ letter keys on the keyboard 124 of the mobile device 100 to compose a name of a contact for an outgoing call. In such a case, rather than receiving (step 502) a composed telephone number, the context module 130C receives a composed text string and uses the composed text string as a search term when performing (step 504) a lookup in the contact database.

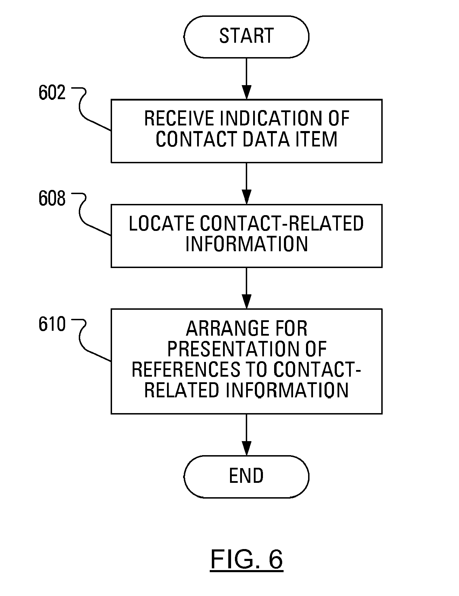

In another scenario, the user browses the contact database to locate a data item associated with a contact to which the user is intending to place an outgoing call. Steps in a third exemplary method of providing enhanced phone call context information are provided in FIG. 6.

Responsive to receiving an instruction to place a telephone call to the contact, the microprocessor 128 passes an indication of the data item associated with the selected contact to the context module 130C. Upon receiving (step 602) the indication of the selected contact data item, the context module 130C locates (step 608) contact-related data items by exploiting logical connections between the data item associated with the contact and the data items for appointments, both past and future, and stored e-mail messages. The context module 130C then arranges (step 610) for the presentation of the references to contact-related data items on the display 126.

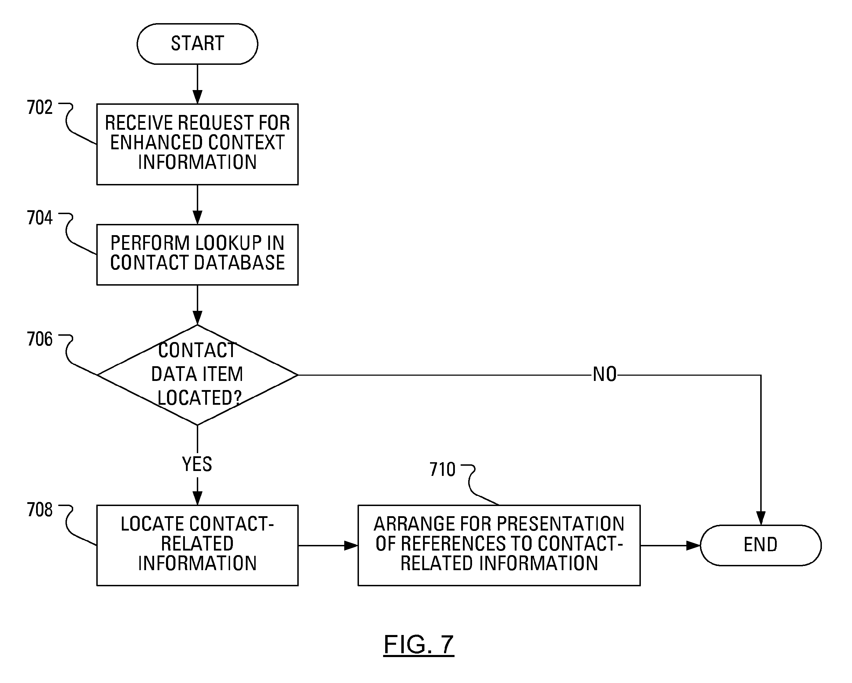

In a fourth timing option, the microprocessor 128 may execute the context module 130C in response to the user requesting contact-related data items while engaged in a telephone call-in-progress. For example, the user may indicate the request by first causing a menu to appear on the display 126 and subsequently selecting a contact-related data items request menu item. Alternatively, the mobile device 100 may have at least one soft key among the auxiliary input/output devices 106. The telephone application may map the soft key to activating the context module 130C and passing to the context module 130C a request for contact-related data items. Steps in a fourth exemplary method of providing enhanced phone call context data items are provided in FIG. 7.

As illustrated in FIG. 7, the context module 130C receives (step 702) the request for contact-related data items. The context module 130C then uses information provided in the request as a search term when performing (step 704) a lookup in the contact database. Notably, the call-in-progress may have been originated by the user or by the other party. In the latter case, the information provided in the request may be CLID information. In the former case, the call may have been placed by pressing number keys on the keyboard 124 to form a destination number for the other party or may have been placed by using the user interface of the mobile device 100 to select a data item for a contact, select a destination number among those available for the contact, cause a menu to appear and select a menu item requesting the mobile device to place a call to the selected destination number.

The context module 130C next determines (step 706) whether a data item has been located for a contact associated with the information provided in the request. In the case wherein the context module 130C determines (step 706) that a data item for the other party has been located, the context module 130C further locates (step 708) contact-related data items, for instance, by exploiting logical connections between the data item associated with the composed telephone number and the data items for appointments, both past and future, and stored e-mail messages. The context module 130C then arranges (step 710) for the presentation of the references to contact-related information on the display 126.

In the case wherein the context module 130C determines (step 706) that a data item for the contact associated with the ongoing call has not been located, the method is complete and the enhanced phone call context information may not be provided.

In operation, during a call placed by the user of the mobile device 100, the called party may ask the user of the mobile device 100 whether a further person may be added to the invitee list of an upcoming meeting. Where the context module 130C has arranged (step 610) for the presentation of the references to contact-related data items, the user may find, on the display 126, a reference to the upcoming meeting. The user may then open the reference to the upcoming meeting and add the further person to the invitee list. In contrast, in the absence of the context module 130C, the user may have been required to exit the phone application user interface screen 200, open a calendar application, locate a reference to the upcoming meeting, open the reference to the upcoming meeting and add the further person to the invitee list.

During the same placed call, the called party may ask the user of the mobile device 100 about the outcome of a recent e-mail thread or ask for information contained in a message in the e-mail thread. Where the context module 130C has arranged (step 610) for the presentation of the references to contact-related data items, the user may find, on the display 126, a reference to each message in the e-mail thread. The user may then open the reference to the last message in the e-mail thread to determine the outcome of the e-mail thread and verbally report the outcome to the called party. Similarly, the user may open the referenced message in the e-mail thread to determine the requested information and verbally report to the called party. In contrast, in the absence of the context module 130C, the user may have been required to exit the phone application user interface screen 200, open a messaging application, locate a reference to the last message in the e-mail thread, open the reference to the last message in the e-mail thread to determine the outcome of the e-mail thread and verbally report the outcome to the called party.

As will be clear to a person of ordinary skill in the art, the device on which aspects of the present application are implemented need not be mobile devices and could be desktop or laptop computers, for instance. Accordingly, the calls made need not be cellular telephone calls or calls that make use of the Plain Old Telephone Service. Indeed, a user employing a laptop computer to place a Voice-over-Internet-Protocol telephone call may benefit from the options presented herein.

The above-described embodiments of the present application are intended to be examples only. Alterations, modifications and variations may be effected to the particular embodiments by those skilled in the art without departing from the scope of the application, which is defined by the claims appended hereto.

## Claims

1. A method of providing enhanced phone call context information in a communication device, said method comprising:
receiving an indication of a given data item in a contact database;
locating a contact-related data item, related to the given data item, in the contact database or another database; and
presenting a reference to said contact-related data item on a display of said communication device.

2. The method of claim 1 wherein said contact-related data item is a data item related to an appointment in a calendar database.

3. The method of claim 2 wherein said appointment has occurred in the past.

4. The method of claim 2 wherein said appointment is scheduled to occur in the future.

5. The method of any one of claims 2 to 4 wherein said appointment has occurred or is scheduled to occur within a predefined time window.

6. The method of claim 1 wherein said contact-related data item is an electronic message.

7. The method of claim 6 wherein said electronic message has been sent within a predetermined time window.

8. The method of claim 6 wherein said electronic message is any of: an e-mail message, a Short Message Service message, a Multimedia Message Service, or an Instant Message.

9. The method of any one of the preceding claims further comprising presenting information related to an in-progress telephone call on said display of said communication device.

10. The method of any one of the preceding claims wherein said indication is obtained from calling line Identification information related to an incoming call.

11. The method of any one of claims 1 to 9 wherein said indication is obtained from data input by a user.

12. A communication device arranged to provide enhanced phone call context information, said communication device comprising:
a display;
a memory storing a contact database;
a processor arranged to execute program code stored in said memory for causing said communication device to implement the method of any one of claims 1 to 11.

13. The communication device of claim 12 further comprising further memory for storing said other database.

14. The communication device of claim 12 wherein said other database comprises a database external to said communication device.

15. The communication device of claim 12 wherein said other database comprises a co-located database to a mobile device server.

16. The communication device of claim 12 wherein said other database comprises a co-located database to a world wide web-based information server.

17. A computer readable medium containing computer-executable instructions that, when performed by a processor, cause said processor to implement the method of any one of claims 1 to 11.
